# EUROPÄISCHE PATENTSCHRIFT

(11) **EP 2 807 049 B1**
(45) Veröffentlichungstag und Bekanntmachung des Hinweises auf die Patenterteilung: **15.07.2020**
(21) Anmeldenummer: 13700479.2
(22) Anmeldetag: 03.01.2013
(51) Int. Cl.: B60L 3/00, B60L 3/04, H02J 7/14, H02P 29/02, H02H 7/09, H02P 29/032, H02P 29/024

(54) **ÜBERSPANNUNGSSCHUTZVORRICHTUNG FÜR EINEN ELEKTRISCHEN ANTRIEB**
OVERVOLTAGE ARRESTER FOR AN ELECTRICAL DRIVE
DISPOSITIF DE PROTECTION CONTRE LES SURTENSIONS POUR UN ENTRAÎNEMENT ÉLECTRIQUE

(30) Priorität: 26.01.2012 DE 102012201097
(43) Veröffentlichungstag der Anmeldung: 03.12.2014
(73) Patentinhaber: Robert Bosch GmbH, 70442 Stuttgart (DE); SEG Automotive Germany GmbH, 70499 Stuttgart (DE)
(72) Erfinder: ESCHENHAGEN, Marc, 71638 Ludvigsburg (DE); GABER, Egon, 71706 Markgroeningen (DE); KURFISS, Jochen, 75417 Lomersheim (DE)
(74) Vertreter: Steinbauer, Florian
(86) Internationale Anmeldenummer: PCT/EP2013/050072
(87) Internationale Veröffentlichungsnummer: WO 2013/110482

(56) Entgegenhaltungen:
- EP-A2- 2 403 133
- US-A- 5 285 344
- US-A1- 2003 231 442

## Beschreibung

### Stand der Technik

Die Erfindung betrifft eine Überspannungsschutzvorrichtung für einen elektrischen Antrieb, insbesondere einen Antrieb für ein Kraftfahrzeug. Die Überspannungsschutzvorrichtung ist ausgebildet, mit einem Bordnetz eines Kraftfahrzeuges verbunden zu werden. Die Überspannungsschutzvorrichtung ist ausgebildet, eine in dem Bordnetz durch ein Abschalten eines Verbrauchers erzeugte Überspannung abzubauen.

Bei aus dem Stand der Technik bekannten Überspannungsschutzvorrichtungen in Kraftfahrzeugen wurde das Problem erkannt, dass diese Schutzvorrichtungen, beispielsweise gebildet durch Halbleiterbauelemente, selbst durch eine im Bordnetz auftretende Überspannung zerstört werden können. Mit der Zerstörung der Überspannungsschutzvorrichtung werden dann mit dem Bordnetz verbundene hinsichtlich einer Überspannung empfindliche Verbraucher zerstört.

Aus der US 2003/0231442 A1 ist ein Verfahren zur Abwehr von Überspannungsschäden in einer elektronischen Schaltung eines Fahrzeugs bekannt, wobei ein Lastabfall erkannt wird und als Antwort auf den Lastabfall der Stromverbrauch der elektronischen Schaltung erhöht wird.

### Offenbarung der Erfindung

Erfindungsgemäß ist die Überspannungsschutzvorrichtung der eingangs genannten Art mit einer Steuereinheit für eine elektronisch kommutierte elektrische Maschine verbunden. Die Überspannungsschutzvorrichtung weist einen Eingang für eine Bordnetzspannung auf und ist ausgebildet, ein Überschreiten eines vorbestimmten Spannungswertes zu erfassen und in Abhängigkeit von dem Überschreiten des Spannungswertes ein Überspannungssignal zu erzeugen. Die Steuereinheit ist ausgebildet, die elektrische Maschine in Abhängigkeit von dem Überspannungssignal vom generatorischen Betrieb in einen wenigstens teilweise verlustbehafteten Betrieb oder in einen motorischen Betrieb zu überführen. So kann vorteilhaft in der elektrischen Maschine eine elektrische Leistung sehr schnell im verlustbehafteten Betrieb in Verlustwärme, oder im motorischen Betrieb in ein mechanisches Moment umgesetzt werden. Bevorzugt kann die elektrische Maschine nach einem Normalisieren der Bordnetzspannung wieder im generatorischen Betrieb, insbesondere im reinen generatorischen Betrieb, betrieben werden.

Die mittels der Überspannung in das Bordnetz eingespeiste elektrische Energie kann so vorteilhaft aus dem Bordnetz abgebaut werden.

In einer bevorzugten Ausführungsform weist die Überspannungsschutzvorrichtung, im Folgenden auch Schutzvorrichtung genannt, wenigstens einen mit dem Eingang verbundenen Halbleiterschutzschalter auf. Der Halbleiterschutzschalter ist ausgebildet, in Abhängigkeit von einem vorbestimmten Spannungswert, von dem Eingang einen Strom über den Halbleiterschutzschalter zu einem Masseanschluss hin zu erzeugen und so - insbesondere mittels Abführen von elektrischen Ladungen - die Bordnetzspannung zu verringern.

Der Halbleiterschutzschalter ist beispielsweise durch wenigstens eine Zenerdiode, eine Reihenschaltung wenigstens einer Zenerdiode mit wenigstens einer Halbleiterdiode, durch eine TVS-Diode (TVS = Transient-Voltage-Supression), wenigstens einen mittels einer Zenerdiode gesteuerten Feldeffekttransistor oder durch wenigstens einen Varistor gebildet. Eine Reaktionszeit des Halbleiterschalters beträgt bevorzugt zwischen einer und zehn Nanosekunden.

In einer anderen Ausführungsform weist der Halbleiterschutzschalter einen Feldeffekttransistor auf, dessen Schaltstrecke ausgebildet ist, den Anschluss für die Bordnetzspannung mit einem Masseanschluss zu verbinden. Der Feldeffekttransistor ist steueranschlussseitig mit einem Spannungsregler mit einem Komparator verbunden, wobei der Spannungsregler neben einer den vorbestimmten Spannungswert repräsentierenden Sollwertspannung eine über der Schaltstrecke des Feldeffekttransistors abfallende Spannung als Eingangsregelgröße bezieht. In einer bevorzugten Ausführungsform ist die Steuereinheit ausgebildet, die elektrische Maschine zum Erzeugen eines magnetischen Drehfeldes anzusteuern und in Abhängigkeit von dem Überspannungssignal einen Phasenwinkel einer Ansteuerung zu ändern und die elektrische Maschine so wenigstens teilweise im verlustbehafteten Betrieb und/oder im Motorbetrieb zu betreiben.

Dadurch kann vorteilhaft eine elektrische Energie im motorischen Betrieb verbraucht werden und so dem Bordnetz entzogen werden.

In einer bevorzugten Ausführungsform ist die Steuereinheit ausgebildet, in Abhängigkeit von dem Überspannungssignal einen Phasenwinkel einer Ansteuerung, insbesondere eine Winkeldifferenz zwischen einem Rotorwinkel und einem von einem Stator der elektrischen Maschine erzeugten Drehfeld zu verringern. Bevorzugt ist die Steuereinheit ausgebildet, die Winkeldifferenz zwischen weniger als 90 Grad und 0 Grad einzustellen.

In dieser Ausführungsform kann mittels der Winkeldifferenz vorteilhaft eine Verlustleistung einer in der Leistungsendstufe der Steuereinheit verbrauchten Leistung eingestellt werden. Bei einer Winkeldifferenz von 90 Grad wird die elektrische Maschine vollständig im generatorischen Betrieb betrieben. Bei einem Phasenwinkel von Null Grad wird die elektrische Maschine weder im generatorischen noch im motorischen Betrieb betrieben. Die von der elektrischen Maschine verbrauchte elektrische Leistung wird als Verlustleistung in der elektrischen Maschine oder zusätzlich der Leistungsendstufe verbraucht.

Bevorzugt ist die Steuereinheit ausgebildet, in Abhängigkeit von dem Überspannungssignal eine Winkeldifferenz zwischen einem Rotorwinkel und einem von einem Stator der elektrischen Maschine erzeugten Drehfeld verschwinden zu lassen. In dieser Ausführungsform beträgt die vorab erwähnte Winkeldifferenz Null Grad. So kann vorteilhaft - auch während eines längeren Zeitintervalls - die elektrische Maschine als elektrischer Verbraucher genutzt werden, um die durch Überspannung in das Bordnetz eingebrachte elektrische Energie zu verbrauchen und die Bordnetzspannung so zu verringern.

Bevorzugt ist die Steuereinheit ausgebildet, in Abhängigkeit von dem Überspannungssignal eine Winkeldifferenz zwischen einem Rotorwinkel und einem von einem Stator der elektrischen Maschine erzeugten Drehfeld derart zu ändern, dass die elektrische Maschine vom Generatorbetrieb in den vollständigen Motorbetrieb überführt werden kann.

Die elektrische Maschine kann so - bevorzugt in einem vorbestimmten Zeitintervall - bis hin zum Absinken der Bordnetzspannung unter den vorbestimmten Spannungswert - mittels Erzeugen eines Drehmomentes die im Bordnetz überschüssige elektrische Energie verbrauchen.

In einer bevorzugten Ausführungsform ist die Steuereinheit ausgebildet, die elektrische Maschine mittels eines Pulsweitenmodulators pulsweitenmoduliert anzusteuern. Die Steuereinheit ist weiter bevorzugt ausgebildet, ein von dem Pulsweitenmodulator der Steuereinheit erzeugtes Ansteuermuster in Abhängigkeit von dem Überspannungssignal zu invertieren.

Durch das Invertieren, welches einer Spiegelung des mittels des Pulsweitenmodulators erzeugten Ansteuersignals an einer Zeitachse entspricht, kann die elektrische Maschine vorteilhaft sehr schnell, insbesondere ohne zusätzliche Rechenalgorithmen durchzuführen, den Phasenwinkel der Ansteuerung um 180 Grad versetzen. Befindet sich der Phasenwinkel zum Ansteuern der elektrischen Maschine vor einem Erzeugen des Überspannungssignals beispielsweise bei 90 Grad, sodass die elektrische Maschine sich vollständig im generatorischen Betrieb befindet, so wird die elektrische Maschine nach einem Erzeugen des Überspannungssignals in Abhängigkeit von dem Überspannungssignal vollständig in den motorischen Betrieb überführt. Die bloße Invertierung des pulsweitenmodulierten Ansteuersignals erfordert vorteilhaft keinen aufwendigen Rechenalgorithmus.

Das invertierte pulsweitenmodulierte Ansteuermuster kann so vorteilhaft mittels des Inverters, insbesondere mittels einer zum Invertieren des pulsweitenmodulierten Ansteuermusters ausgebildeten Transistorschaltung, erzeugt werden. In einer anderen Ausführungsform ist die Steuereinheit ausgebildet, das invertierte Ansteuermuster - beispielsweise gesteuert durch einen Rechenalgorithmus - zu erzeugen.

Bevorzugt ist die Steuereinheit ausgebildet, in Abhängigkeit von dem Überspannungssignal einen Erregerstrom durch eine Erregerspule der elektrischen Maschine über einen mit der Erregerspule verbundenes Halbleiterbauelement, insbesondere einen Halbleiterschalter oder eine Diode, abzubauen. Durch den Kurzschluss oder das Umpolen der Erregerspule kann vorteilhaft der Erregerstrom reduziert werden, sodass mittels der so gebildeten Schnellentregung der elektrischen Maschine die Bordnetzspannung vorteilhaft abgesenkt werden kann. Mittels der so gebildeten Schnellentregung der elektrischen Maschine kann vorteilhaft eine Stufe der Überspannungsschutzvorrichtung gebildet sein, welche - gesteuert durch das Überspannungssignal - nach der vorab beschriebenen Änderung des Phasenwinkels der Maschinenansteuerung wirken kann. So können vorteilhaft die mittels der Änderung des Phasenwinkels zum Verbrauchen von elektrischer Leistung geschalteten Komponenten der elektrischen Maschine, insbesondere die Leistungsendstufe oder die Statorspulen, nicht durch die in den Komponenten erzeugte Verlustwärme zerstört werden.

Weiter vorteilhaft kann der zuvor erwähnte Halbleiterschutzschalter nach Aktivierung der Schnellentregung nicht durch Überwärmung zerstört werden.

In einer bevorzugten Ausführungsform der Überspannungsschutzvorrichtung weist die Überspannungsschutzvorrichtung wenigstens einen Halbleiterschutzschalter auf. Bevorzugt kann der Halbleiterschutzschalter in einer mehrstufig ausgebildeten Überspannungsschutzvorrichtung in einer zeitlichen Reihenfolge eines mehrstufigen Eingreifens als erste Stufe des mehrstufigen Schutzes wirken. Während der Aktivierung des Halbleiterschutzschalters kann von der Schutzvorrichtung das Überspannungssignal erzeugt werden.

Weiter kann während des zeitlichen Überspannungsschutzverlaufes der Phasenwinkel der Maschinenansteuerung geändert werden. Nach dem Ändern des Phasenwinkels, beispielsweise der zuvor beschriebenen Phasenumkehr vom generatorischen in den motorischen Betrieb der elektrischen Maschine mittels Invertierung des pulsweitenmodulierten Ansteuermusters kann weiter elektrische Energie dem Bordnetz entzogen werden, sodass die zuvor erwähnten Halbleiterschutzschalter nicht mehr vollständig die elektrische Energie in Verlustwärme umsetzen müssen. Das Ändern des Phasenwinkels kann eine auf die erste Stufe folgende, insbesondere eine zweite oder dritte Stufe, eines vorab erwähnten mehrstufigen Eingreifens bilden.

In einer dritten Stufe des zeitlichen Schutzverlaufes kann dann die zuvor erwähnte Schnellentregung der elektrischen Maschine den weiteren Schutz übernehmen, sodass der wenigstens eine Halbleiterschutzschalter und die durch die Änderung des Phasenwinkels durch Verlustwärme erwärmten Komponenten der elektrischen Maschine und/oder der Steuereinheit nicht durch zu hohe Erwärmung zerstört werden können. Die Steuereinheit ist bevorzugt ausgebildet, die so gebildeten Stufen in Abhängigkeit von dem Überspannungssignal zu aktivieren, welche daraufhin zeitlich nacheinander zum Abbau der Überspannung eingreifen können.

Anders als in der zuvor erwähnten Ausführungsform, bei der die Steuereinheit ausgebildet ist, die Erregerspule der elektrischen Maschine kurzzuschließen, ist die Steuereinheit in der anderen Ausführungsform ausgebildet, in Abhängigkeit von dem Überspannungssignal die Erregerspule der elektrischen Maschine über einen mit der Erregerspule verbundenen Halbleiterschalter, insbesondere eine H-Brücke, auch Vollbrücke genannt, umzupolen.

Die Erfindung betrifft auch ein Verfahren zum Betreiben eines Überspannungsschutzes für ein Fahrzeugbordnetz mit einer elektrischen Maschine.

In einem Verfahrensschritt wird während eines generatorischen Betriebes der elektrischen Maschine ein Überschreiten eines vorbestimmten Spannungswertes einer Bordnetzspannung erfasst und ein das Überschreiten repräsentierendes Überspannungssignal erzeugt. Das Überschreiten der Bordnetzspannung wird beispielsweise durch einen Lastabwurf eines elektrischen Verbrauchers verursacht.

Weiter bevorzugt wird in Abhängigkeit von dem Überspannungssignal eine Schnellentregung eines Erregermagnetfeldes der elektrischen Maschine eingeleitet.

Bevorzugt wird in einem weiteren Schritt ein zeitliches Ansteigen der Bordnetzspannung erfasst und in Abhängigkeit von dem Spannungsanstieg ein Phasenwinkel einer Ansteuerung der elektrischen Maschine derart geändert, dass die elektrische Maschine vom generatorischen Betrieb wenigstens teilweise oder vollständig in den motorischen Betrieb überführt wird.

Weiter wird bei dem Verfahren bei Überschreiten eines vorbestimmten Spannungsschwellwertes der Bordnetzspannung ein Halbleiterschutzschalter aktiviert, welcher ausgebildet ist, in Abhängigkeit von dem Überschreiten des Spannungsschwellwertes einen Anschluss der Bordnetzspannung mit einem Masseanschluss niederohmig zu verbinden und so elektrische Energie aus dem Bordnetz abzubauen.

Der Halbleiterschutzschalter ist bevorzugt durch eine TVS-Diode oder einen mittels einer Zenerdiode gesteuerten Feldeffekttransistor gebildet.

Bevorzugt wird die elektrische Maschine durch ein Invertieren eines pulweitenmodulierten Ansteuermusters vom generatorischen in den motorischen Betrieb überführt.

Die Erfindung wird nun im Folgenden anhand von Figuren und weiteren Ausführungsbeispielen beschrieben. Weitere vorteilhafte Ausführungsvarianten ergeben sich aus den in den Figuren und den abhängigen Ansprüchen beschriebenen Merkmalen.
Figur 1 zeigt schematisch ein Ausführungsbeispiel für einen elektrischen Antrieb mit einer dreistufig ausgebildeten Überspannungsschutzvorrichtung;
Figur 2 zeigt ein mittels Pulsweitenmodulation erzeugtes Ansteuermuster zum Ansteuern einer mit einem Stator verbundenen Leistungsendstufe zum Erzeugen eines magnetischen Drehfeldes;
Figur 3 zeigt schematisch einen Verlauf eines mittels des in Figur 2 dargestellten Ansteuermusters erzeugten Magnetfeldvektors im generatorischen und im motorischen Betrieb;
Figur 4 zeigt einen Phasenwinkel einer Ansteuerung des in Figur 1 dargestellten Elektrischen Antriebs, wobei der Phasenwinkel vom generatorischen in einen neutralen Betrieb und von dort weiter bis hin zu einem motorischen Betrieb geändert wird;
Figur 5 zeigt ein Diagramm, in dem zeitabhängige Spannungsverläufe einer Bordnetzspannung dargestellt sind, wobei die Spannungsverläufe jeweils zueinander verschiedenen Schutzgraden entsprechen, wobei ein Schutzgrad keinen Überspannungsschutz oder zwischen einer und drei Schutzstufen aufweist.

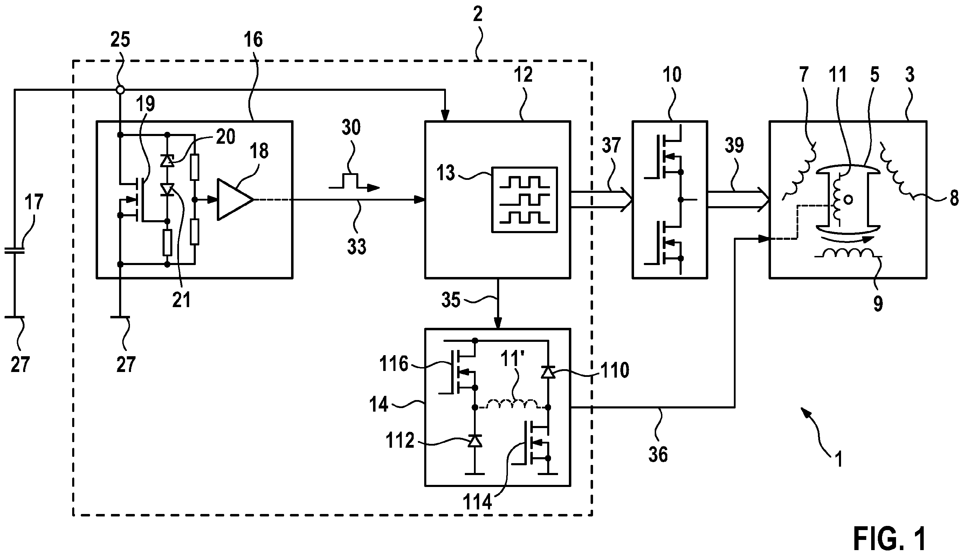

Figur 1 zeigt ein Ausführungsbeispiel für einen elektrischen Antrieb 1. Der elektrische Antrieb 1 umfasst eine elektrische Maschine mit einem Stator 3 und einem Rotor 5. Der Stator 3 weist in diesem Ausführungsbeispiel drei Statorspulen, nämlich eine Statorspule 7, eine Statorspule 8 und eine Statorspule 9 auf. Der Stator 3 kann in einer anderen Ausführungsform des Antriebs auch mehr als drei Statorspulen, beispielsweise fünf oder zehn Statorspulen aufweisen.

Der elektrische Antrieb 1 weist auch eine Leistungsendstufe 10 und eine Überspannungsschutzvorrichtung 2 auf.

Der elektrische Antrieb 1 weist auch eine Verarbeitungseinheit 12 als Steuereinheit der elektrischen Maschine auf, welche ausgebildet ist, die Leistungsendstufe 10 zum Bestromen der Statorspulen des Stators 3 und so zum Erzeugen eines magnetischen Drehfeldes anzusteuern. Dazu weist die Verarbeitungseinheit 12 einen Pulsweitenmodulator 13 auf. Der Pulsweitenmodulator 13 ist ausgebildet, Steuersignale zum Ansteuern von Steueranschlüssen von Halbleiterschaltern der Leistungsendstufe 10 zu erzeugen und ausgangsseitig auszugeben. Die Verarbeitungseinheit 12 ist beispielsweise durch einen Mikroprozessor, einen Mikrocontroller, ein FPGA (FPGA = Field-Programmable-Gate-Array) oder ein ASIC (ASIC = Application-Specific-Integrated-Circuit) gebildet. Die Verarbeitungseinheit 12 ist ausgangsseitig über eine in diesem Ausführungsbeispiel mehrkanalige Verbindung 37 mit der Leistungsendstufe 10 verbunden. Die Leistungsendstufe 10 ist ausgangsseitig über eine mehrkanalige Verbindung 39 mit dem Stator, und dort mit den Statorspulen 7, 8 und 9 verbunden. Die Statorspulen 7, 8 und 9 können beispielsweise in einer Sternanordnung miteinander verbunden sein.

Die Verarbeitungseinheit 12 ist eingangsseitig mit einem Anschluss 25 für eine Bordnetzspannung verbunden. Die Verarbeitungseinheit 12 ist ausgebildet, in Abhängigkeit von einer vom Anschluss 25 empfangenen Bordnetzspannung einen Phasenwinkel der Ansteuerung zum Erzeugen des magnetischen Drehfeldes in Abhängigkeit von der Rotorposition des Rotors 5 zu ändern. Die Verarbeitungseinheit 12 kann beispielsweise dazu einen Analog-Digitalwandler aufweisen, welcher ausgebildet ist, die Bordnetzspannung in ein digitales Ausgangssignal zu wandeln. Die Verarbeitungseinheit 12 ist eingangsseitig auch über eine Verbindung 33 mit einem Halbleiterschutzschalter 16 verbunden.

Der Halbleiterschutzschalter 16 weist in diesem Ausführungsbeispiel einen Feldeffekttransistor 19 auf, dessen Steueranschluss mit einem Ausgang eines Spannungsteiles, gebildet aus einem Widerstand und wenigstens einer Diode, in diesem Ausführungsbeispiel einer Zenerdiode 20 und einer zusätzlichen Zenerdiode 20 in Reihe geschaltete Halbleiterdiode 21, gebildet ist.

Der Sourceanschluss des Feldeffekttransistors 19 ist mit einem Masseanschluss 27 verbunden, der Drainanschluss des Feldeffekttransistor 19 ist mit dem Anschluss 25 für die Bordnetzspannung verbunden. Der Feldeffekttransistor 19 ist ausgebildet, in Abhängigkeit von einer vorbestimmten Spannung, insbesondere einem Spannungsschwellwert - gesteuert durch die Zenerdiode 20 und die Halbleiterdiode 21 - den Anschluss 25 mit dem Masseanschluss 27 niederohmig zu verbinden. So kann der Halbleiterschutzschalter 16 wenigstens für eine kurze Zeit, solange der Feldeffekttransistor 19 nicht zu sehr erwärmt wird, eine durch Überspannung in das Bordnetz eingebrachte elektrische Energie durch Entladen abbauen und in Verlustwärme wandeln.

Die Halbleiterschutzvorrichtung 16 weist in diesem Ausführungsbeispiel auch einen Komparator 18 auf. Der Komparator ist eingangsseitig über einen Spannungsteiler mit dem Anschluss 25 für die Bordnetzspannung und über einen weiteren Anschluss des Spannungsteilers mit dem Masseanschluss 27 verbunden. Der Komparator 18 ist ausgebildet, in Abhängigkeit von einem vorbestimmten Spannungsschwellwert ein Überspannungssignal 30 zu erzeugen und dieses ausgangsseitig auszugeben. Der Spannungsschwellwert zum Erzeugen des Überspannungssignals 30 ist in diesem Ausführungsbeispiel kleiner ausgebildet als der vorbestimmte Spannungswert, bei dessen Überschreiten durch die Bordnetzspannung der Feldeffekttransistor 19 - insbesondere im Linearbetrieb - niederohmig durchgeschaltet wird. Die passiven Halbleiterbauelemente des Halbleiterschutzschalters 16 stellen in diesem Ausführungsbeispiel eine erste Stufe eines mehrere Stufen aufweisenden Schutzsystems dar. Die erste Stufe des Schutzsystems bestimmt in diesem Ausführungsbeispiel durch den Spannungsschwellwert des Komparators 18 die Aktivierung der zweiten und dritten Stufe. So kann mittels des Komparators 18 eine ansteigende Bordnetzspannung, welche beispielsweise mit einem Spannungsanstieg von beispielsweise 100 Volt pro Millisekunde aufweist, von dem Komparator 18 bei einem vorbestimmten Spannungsschwellwert, beispielsweise 60 Volt, das Überspannungssignal 30 erzeugt und ausgangsseitig ausgegeben werden.

Die Reaktionszeit - beispielsweise verursacht durch eine Filterzeit eines Digitalfilters der Verarbeitungseinheit - des Komparators beträgt beispielsweise fünf Mikrosekunden.

Die Verarbeitungseinheit 12 ist ausgebildet, als zweite Stufe des Überspannungsschutzes in Abhängigkeit von dem Überspannungssignal 30 eine Schnellentregung der elektrischen Maschine, insbesondere der Erregerspule 11 einzuleiten. Dazu ist die Verarbeitungseinheit 12 ausgangsseitig über eine Verbindungsleitung 35 mit einer Versorgungs- und Schnellentregungseinheit 14 der Erregerspule 11 verbunden. Die Versorgungs- und Schnellentregungseinheit 14 weist in diesem Ausführungsbeispiel eine Vollbrücke umfassend zwei steuerbar ausgebildete Halbleiterschalter 114 und 116 und zwei Dioden 110 und 112 auf. Die Erregerspule 11, welche ausgangsseitig über eine Verbindungsleitung 36 mit der Versorgungs- und Schnellentregungseinheit 14 verbunden ist, ist in dem Schaltdiagramm der Versorgungs- und Schnellentregungseinheit 14 gestrichelt als Erregerspule 11' dargestellt. Im Normalbetrieb wird die Erregerspule 11 über die Halbleiterschalter 114 und 116, in diesem Ausführungsbeispiel Feldeffekttransistoren, bestromt. Der Feldeffekttransistor 114 bildet einen Low-Side-Transistor, der während des Normalbetriebs dauerhaft durchgeschaltet sein kann, wobei der Transistor 116 einen High-Side-Transistor bildet, der von der Verarbeitungseinheit 12 und dort vom Pulsweitenmodulator 13 mit einem Pulsmuster angesteuert werden kann. In einer anderen Ausführungsform ist der High-Side-Transistor 116 dauerhaft durchgeschaltet, die Diode 110 wirkt dann als Freilaufdiode, wobei der Low-Side-Transistor gepulst angesteuert werden kann. Die Versorgungs- und Schnellentregungseinheit 14 ist ausgebildet, in Abhängigkeit von einem eingangsseitig über die Verbindungsleitung 35 empfangenen Überspannungssignal die Halbleiterschalter, in diesem Ausführungsbeispiel Feldeffekttransistoren zu sperren, sodass der Stromfluss durch die Erregerspule 11 bei geöffneten Halbleiterschaltern 114 und 116 über die Dioden 110 und 112 und eine anliegende Bordnetzspannung schnell abgebaut werden kann.

Mit dem Anschluss 25 ist in diesem Ausführungsbeispiel auch ein Zwischenkreiskondensator 17 verbunden, dessen weiterer Anschluss mit dem Masseanschluss 27 verbunden ist. Der zuvor erwähnte Spannungsanstieg wird in diesem Ausführungsbeispiel auch durch den Zwischenkreiskondensator 17 durch eine weitere Ladungsaufnahme in den Zwischenkreiskondensator 17 begrenzt.

Die Verarbeitungseinheit 12 ist in diesem Ausführungsbeispiel ausgebildet, einen Spannungsanstieg der eingangsseitig empfangenen Bordnetzspannung zu erfassen und in Abhängigkeit von dem Spannungsanstieg, insbesondere einer zeitlichen Änderung der Bordnetzspannung den Phasenwinkel der Ansteuerung der Leistungsendstufe 10 und somit auch des Stators 3 zu ändern. In diesem Ausführungsbeispiel ist die Verarbeitungseinheit 12 ausgebildet, in Abhängigkeit von dem Spannungsanstieg das vom Pulsweitenmodulator 13 erzeugte Ansteuermuster zu invertieren. Dadurch wird die elektrische Maschine, insbesondere der Stator 3 und der Rotor 5 vom generatorischen in den motorischen Betrieb überführt. So kann vorteilhaft verhindert werden, dass der Halbleiterschutzschalter 16, welcher ab dem bereits erwähnten vorbestimmten Spannungswert niederohmig leitend wird, durch die in diesem umgesetzte Verlustwärme zerstört werden kann.

Eine Filterung des Bordnetzspannungssignals und eine Auswertung bis hin zu einer Entscheidung zum Einleiten der Phasenumkehr, insbesondere durch Invertieren des Ansteuermusters, benötigt eine Rechenzeit, wobei die Verarbeitungseinheit 12 ausgebildet ist, die Phasenumkehr einzuleiten, bevor der Halbleiterschutzschalter 16 durch Erwärmung zerstört worden ist.

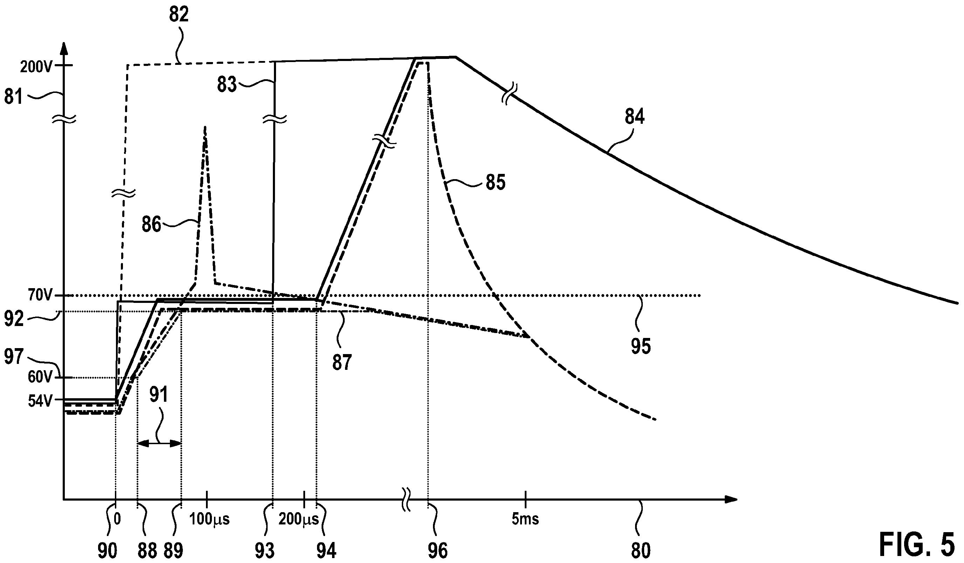

Ein zeitlicher Verlauf der Spannungsverläufe und die Wirkungsweise der Verarbeitungseinheit, des Halbleiterschutzschalters 16 und der Versorgungs- und Schnellentregungseinheit 14 sind im Folgenden in Figur 5 dargestellt.

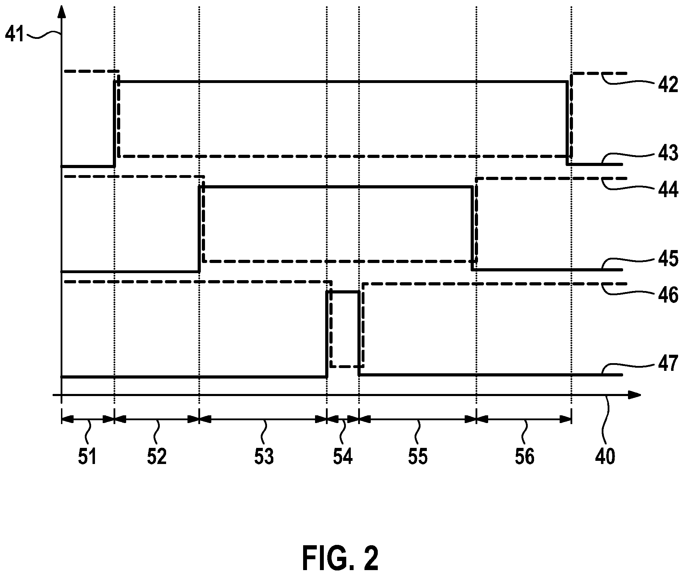

Figur 2 zeigt ein Ansteuermuster zum Ansteuern der in Figur 1 bereits gezeigten Leistungsendstufe 10 zum Erzeugen eines magnetischen Drehfeldes durch den Stator 3 der elektrischen Maschine. Das Ansteuermuster ist in einem Diagramm dargestellt. Das Diagramm weist eine Zeitachse 40 und eine Amplitudenachse 41 auf. Dargestellt ist ein Ansteuersignal 43 für den generatorischen Betrieb der Statorspule 7, ein Ansteuersignal 45 für den generatorischen Betrieb der Statorspule 8 und ein Ansteuersignal 47 für den generatorischen Betrieb der Statorspule 9.

Dargestellt ist ein zu dem Ansteuersignal 43 inverses Ansteuersignal 42 für den motorischen Betrieb der Statorspule 7, ein zu dem Ansteuersignal 45 inverses Ansteuersignal 44 für den motorischen Betrieb der Statorspule 8 und ein zu dem Ansteuersignal 47 inverses Ansteuersignal 46 für den motorischen Betrieb der Statorspule 9. Das Invertieren der Ansteuersignale der Statorspule und Erzeugen von invertierten Ansteuersignalen benötigt beispielsweise eine Verarbeitungszeit von fünf Mikrosekunden. Damit ist die Invertierung des Phasenwinkels deutlich schneller als ein Errechnen von einem geänderten Phasenwinkel durch die Verarbeitungseinheit 12. Das Errechnen des geänderten Phasenwinkels benötigt beispielsweise eine Verarbeitungszeit von einer Millisekunde.

Dargestellt sind Zeitintervalle 51, 52, 53, 54, 55 und 56, welche jeweils aufeinanderfolgend aneinander anschließen. Zu einem Beginn eines jeden Zeitintervalls wird das Ansteuermuster, und damit der Bestromungszustand des Stators 3 geändert.

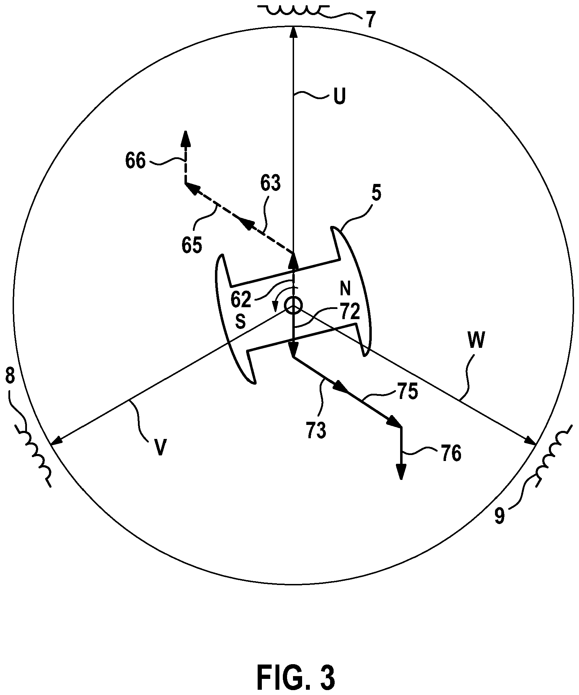

Figur 3 zeigt den in Figur 1 bereits dargestellten Rotor 5. Dargestellt sind entlang eines Rotorumlaufs des Rotors 5 auch Phasenwinkel U, V und W, wobei der Phasenwinkel U der Statorspule 7, der Phasenwinkel V der Statorspule 8 und der Phasenwinkel W der Statorspule 9 entspricht.

Dargestellt sind auch Feldvektoren, welche jeweils einem in Figur 2 dargestellten Beschaltungszustand des Stators entsprechen. Dargestellt ist ein Feldvektor 62 von einem Magnetfeld, welches während des Zeitintervalls 52 von dem Stator erzeugt wird. Dargestellt ist auch ein Feldvektor 63, welcher dem Zeitintervall 53 entspricht, ein Feldvektor 65, welcher dem Zeitintervall 55 entspricht und ein Feldvektor 66, welcher dem Zeitintervall 56 entspricht. Die Feldvektoren 62, 63, 65 und 66 repräsentieren dabei einen Richtungsverlauf des von dem Stator erzeugten Magnetfeldes durch das in Figur 2 dargestellte Ansteuermuster. Dargestellt sind in Figur 3 Feldvektoren 72, 73, 75 und 76, deren Magnetfeld jeweils im generatorischen Betrieb der elektrischen Maschine in Figur 1 erzeugt wurde. Dargestellt sind auch Feldvektoren 62, 63, 65 und 66, welche dabei beispielhaft dem motorischen Betrieb der elektrischen Maschine in Figur 1 entsprechen.

Die dem generatorischen Betrieb entsprechenden Ansteuersignale in Figur 2 sind die Signale 43, 45 und 47. Der Feldvektor 72 entspricht dem Feldverlauf in dem Zeitintervall 52, der Feldvektor 73 dem Feldverlauf im Zeitintervall 53, der Feldvektor 75 dem Feldverlauf im Zeitintervall 55 und der Feldvektor 76 dem Feldverlauf im Zeitintervall 56. Die Richtung der Feldvektoren im generatorischen und im motorischen Betrieb sind im selben Zeitintervall zueinander entgegengesetzt gerichtet.

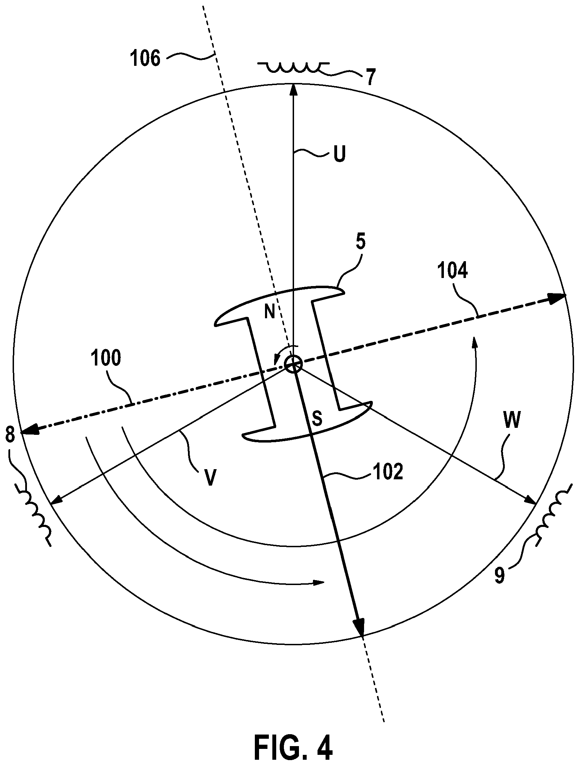

Figur 4 zeigt den in Figur 3 bereits dargestellten Rotor 5 zusammen mit den Rotorwinkeln U, V und W. Dargestellt ist ein Phasenwinkel 100 mittels eines Vektors, welcher zu einer Feldachse 106 des Erregerfeldes des Rotors 5 orthogonal verläuft. Die Feldachse 106 repräsentiert einen Rotorwinkel des Rotors 5.

Der Phasenwinkel 100 verläuft in Drehrichtung des Rotors 5 90 Grad zum Rotorfeld nacheilend, sodass die elektrische Maschine sich im reinen generatorischen Betrieb befindet. Dargestellt ist auch Phasenwinkel 102 einer Ansteuerung, bei welcher die Phasenwinkeldifferenz zwischen dem Feld des Rotors 5 und dem Feld des Stators 3 verschwindet, das heißt null Grad beträgt. Die elektrische Maschine befindet sich vollständig im verlustbehafteten Betrieb. Die elektrische Maschine kann in diesem Betriebszustand keine mechanische Leistung aufnehmen oder abgeben, sodass mittels der elektrischen Maschine die aufgenommene elektrische Energie in Wärme umgesetzt werden kann.

Dargestellt ist auch ein Phasenwinkel 104, welcher entgegengesetzt zum Phasenwinkel 100 verläuft. Die elektrische Maschine befindet sich im Falle einer Ansteuerung mit dem Phasenwinkel 104 im motorischen Betrieb. Das Statorfeld eilt im Falle des Phasenwinkels 104 dem Rotorfeld um 90 Grad voraus.

Die Veränderung des Phasenwinkels vom generatorischen Betrieb, repräsentiert durch den Phasenwinkel 100 zum Phasenwinkel 102 kann beispielsweise durch die in Figur 1 dargestellte Verarbeitungseinheit 12 in einer Regelung in Abhängigkeit von dem von der Verarbeitungseinheit 12 erfassten Spannungsanstieg, insbesondere der Änderung der Spannung pro Zeit erfolgen. Beispielsweise kann die Verarbeitungseinheit 12 den Phasenwinkel der Ansteuerung - ausgehende vom generatorischen Betrieb - derart ändern, dass die Phasenwinkeldifferenz mit größer werdendem Spannungsanstieg verkleinert wird. So wird mit der Vergrößerung des Spannungsanstiegs der generatorische Betrieb weiter zurückgenommen, bis hin zum Phasenwinkel 102, bei dem kein generatorischer Betrieb mehr vorliegt und sich die elektrische Maschine nur noch im verlustbehafteten Betrieb befindet.

Die Verarbeitungseinheit 12 in Figur 1 kann dazu beispielsweise einen Diskriminator aufweisen, welcher ausgebildet ist, den Phasenwinkel in Abhängigkeit von dem Spannungsanstieg einzustellen. Wird beispielsweise bei einem sehr steilen Spannungsanstieg eine weitere Energieaufnahme durch die elektrische Maschine von der Verarbeitungseinheit 12 bestimmt, so kann die Verarbeitungseinheit 12 den Phasenwinkel weiter in Richtung des Phasenwinkels 104, bis hin zur Richtung des Phasenwinkels 104 verschieben. Somit kann in Abhängigkeit von dem Spannungsanstieg der Bordnetzspannung der Anteil des motorischen Betriebs der elektrischen Maschine, und damit der Anteil einer Abgabe einer mechanischen Leistung durch die Verarbeitungseinheit 12 in Figur 1 bestimmt werden. Die Verarbeitungseinheit 12 kann die Änderung des Phasenwinkels beispielsweise bis hin zu einem Zeitpunkt durchführen, bei dem die Bordnetzspannung am Anschluss 25 einen vorbestimmten Spannungswert, beispielsweise 50 Volt unterschreitet. Hat die weiter abnehmende Bordnetzspannung beispielsweise ihren Normalwert, beispielsweise 48 Volt, wieder erreicht, so kann durch die Verarbeitungseinheit 12 das Überspannungssignal über die Verbindungsleitung 35 unterbrochen, insbesondere nicht mehr erzeugt werden, sodass die Schnellentregung durch die Versorgungs- und Schnellentregungseinheit 14 gestoppt wird und die Erregerspule 11 wieder im normalen Betrieb zur Felderzeugung weiter betrieben wird.

Der vorab beschriebene Abbau der Überspannung im Bordnetz benötigt auf diese Weise beispielsweise zwischen 60 und 100 Millisekunden, wodurch beispielsweise ein Betrieb eines Elektrofahrzeugs nicht gestört werden kann und das Elektrofahrzeug wegen der Trägheit aller bewegten Massen ruckfrei weiterfahren kann.

Figur 5 zeigt ein Diagramm, in welchem Spannungsverläufe der Bordnetzspannung dargestellt sind, welche beispielsweise am Anschluss 25 in Figur 1 von dem Halbleiterschutzschalter 16 und von der Verarbeitungseinheit 12 erfasst werden kann. Das Diagramm weist eine Zeitachse 80 und eine Amplitudenachse 81 für die Bordnetzspannung auf. Zu einem Zeitpunkt 90 findet in dem Bordnetz ein Lastabwurf, auch Load-Dump genannt, statt. Dargestellt ist ein Spannungsverlauf 82, welcher den Spannungsverlauf der Bordnetzspannung repräsentiert, wenn der elektrische Antrieb in Figur 1 keinen Halbleiterschutzschalter 16 keine durch die Verarbeitungseinheit 12 erzeugte Phasenwinkeländerung und keine Schnellentregung durch die Versorgungs- und Schnellentregungseinheit 14 aufweist. Dargestellt ist auch ein Spannungswert 95, welche einen Schwellwert für eine Zerstörung von elektronischen Bauelementen, beispielsweise von elektronischen Bauelementen, welche mit dem Bordnetz verbunden und von diesem versorgt werden, repräsentiert. Die elektronischen Bauelemente können beispielsweise eine Servolenkung, ein Klimakompressor eine Wasserpumpe sein. Die in Figur 1 dargestellte Verarbeitungseinheit 12, die Leistungsendstufe 10 und der Zwischenkreiskondensator 12 bilden ebenfalls ein Ausführungsbeispiel für ein elektronisches Bauelement, welches bei einer Betriebsspannung oberhalb des Spannungswertes 95 zerstört werden kann.

Dargestellt ist auch ein Spannungsverlauf 83, welcher einem elektrischen Antrieb mit einem Halbleiterschutzschalter umfassend wenigstens eine Zenerdiode oder einer Supressordiode, auch TVS-Diode genannt, repräsentiert. Die Zenerdioden beziehungsweise Supressordioden können die Bordnetzspannung noch bis zu einem Zeitpunkt von etwa 150 Mikrosekunden nach dem Zeitpunkt 90 unterhalb des Spannungswertes 95 konstant halten, wobei die Zenerdioden zum Zeitpunkt 93 zerstört werden. Die Bordnetzspannung steigt dann wieder an, in diesem Ausführungsbeispiel bis zu 200 Volt. Die zuvor erwähnten elektronischen Bauelemente werden dann auch zerstört.

Dargestellt ist auch ein Spannungsverlauf 84, welcher einem elektrischen Antrieb nach einem Lastabwurf zum Zeitpunkt 90 entspricht, wobei der elektrische Antrieb wenigstens einen Halbleiterschutzschalter mit Zenerdioden und einen Zwischenkreiskondensator aufweist. Der Zwischenkreiskondensator kann zwischen dem Zeitpunkt 93 und einem Zeitpunkt 94 noch Energie aufnehmen, so dass eine Anstiegsgeschwindigkeit der Bordnetzspannung und so eine Aktivierung des Halbleiterschutzschalters verzögert wird. Zum Zeitpunkt 94 werden dann die Zenerdioden und/oder Feldeffekttransistoren des Halbschalterschutzschalters auch durch Erwärmung zerstört. Die Bordnetzspannung steigt im weiteren zeitlichen Verlauf weiter bis auf 200 Volt an und fällt dann mit Entladung des Kondensators wieder ab.

Dargestellt ist auch ein Spannungsverlauf 85, welcher einem elektrischen Antrieb mit einem Halbleiterschutzschalter umfassend wenigstens eine Zenerdiode, mit einer Verarbeitungseinheit wie der Verarbeitungseinheit 12 in Figur 1, welcher ausgebildet ist, eine Schnellentregung einzuleiten, wobei der Antrieb einen Zwischenkreiskondensator aufweist, entspricht. Die Schnellentregung wird beispielsweise 200 Mikrosekunden nach deren Aktivierung wirksam. Sichtbar ist, dass auch im Falle des Spannungsverlaufs 85 bei einem Zeitpunkt 94 die Feldeffekttransistoren des Halbleiterschutzschalters zerstört werden, was einen Spannungsanstieg der Bordnetzspannung bewirkt. Erst bei einem Zeitpunkt 96, etwa bei vier bis fünf Millisekunden nach dem Zeitpunkt 90 des Lastabwurfs, wird die Schnellentregung der elektrischen Maschine sichtbar wirksam, was sich in einem stärkeren Spannungsabfall im Vergleich zum Spannungsverlauf 84 zeigt.

Dargestellt ist auch ein Spannungsverlauf 86, welcher dem in Figur 1 dargestellten elektrischen Antrieb mit der Überspannungsschutzvorrichtung 2 entspricht, welche im Falle des Spannungsverlaufes 86 keinen Halbleiterschutzschalter, insbesondere keinen Feldeffekttransistor 19, keine Zenerdiode 20 und keine Diode 21 aufweist. Der Halbleiterschutzschalter 16 weist im Falle der einen Spannungsverlauf repräsentierenden Kurve 86 nur den Komparator 18 auf, welcher in einem Zeitintervall 91 das Überspannungssignal 30 zum Einleiten eines Phaseneingriffs durch die Verarbeitungseinheit 12 erzeugt.

Sichtbar ist eine Spannungsspitze, repräsentiert durch den Transienten im Bereich des Zeitpunktes 89 des Spannungsverlaufs 86, welcher von parasitären Induktivitäten zwischen dem Zwischenkreiskondensator und dem Halbleiterschutzschalter in Abhängigkeit von der sprunghaften Phasenumkehr vom generatorischen in den motorischen oder verlustbehafteten Betrieb erzeugt wird. Die Bordnetzspannung überschreitet nur kurzzeitig - beispielsweise während eines Zeitintervalls von einer Mikrosekunde - den Spannungswert 95, welcher eine Zerstörgrenze von elektronischen Bauelementen repräsentiert. Zum Zeitpunkt 200 Mikrosekunden unterschreitet der Spannungsverlauf wieder den Spannungswert 95 und fällt dann weiter ab, bis hin zu einem in diesem Diagramm nicht dargestellten Normalniveau, beispielsweise 48 Volt.

Dargestellt ist auch ein Spannungsverlauf 87, welcher durch die in Figur 1 dargestellte Überspannungsschutzvorrichtung 2 des Antriebs 1 bewirkt wird.

Zum Zeitpunkt 90 findet der bereits erwähnte Lastabwurf eines elektrischen Verbrauchers, der mit dem Bordnetz verbunden ist, statt. Zum Zeitpunkt 88 wird von dem in Figur 1 dargestellten Komparator 18 des Halbleiterschutzschalters 16 bei Überschreiten des vorbestimmten Spannungswertes 97 - in diesem Ausführungsbeispiel 60 Volt - das Überspannungssignal 30 erzeugt. Im Zeitintervall 91 wird eine zeitliche Spannungsänderung der Bordnetzspannung durch die Verarbeitungseinheit erfasst. Zum Zeitpunkt 89 wird durch die Verarbeitungseinheit 12 in Abhängigkeit von dem Spannungsanstieg die Phasenänderung des Phasenwinkels gestartet. In einer anderen Ausführungsform wird zum Zeitpunkt 89 ein Phasenkurzschluss der Phase gestartet.

Die zuvor beschriebene Spannungsspitze im Bereich des Zeitpunktes 100 Mikrosekunden des Spannungsverlaufes 86 wird durch die Halbleiterschutzelemente des Halbleiterschutzschalters 16, in diesem Ausführungsbeispiel durch den Feldeffekttransistor 19, gesteuert durch die Zenerdiode 20 und die Halbleiterdiode 21, beim Überschreiten eines vorbestimmten Spannungswertes 92 bewirkt. Der Spannungsverlauf der Bordnetzspannung überschreitet im weiteren Verlauf, beginnend vom Zeitpunkt 90 des Lastabwurfs an, die Zerstörgrenze der elektronischen Bauelemente, insbesondere den Spannungswert 95 nicht.

## Patentansprüche

1. Überspannungsschutzvorrichtung (2) für einen elektrischen Antrieb,
welche ausgebildet ist, mit einem Bordnetz eines Fahrzeuges verbunden zu werden und ausgebildet ist, eine in dem Bordnetz durch ein Abschalten eines Verbrauchers erzeugte Überspannung abzubauen,
**dadurch gekennzeichnet, dass**
die Überspannungsschutzvorrichtung (2) mit einer Steuereinheit (12) für eine elektronisch kommutierte elektrische Maschine (3, 5) verbunden ist und die Überspannungsschutzvorrichtung (2) einen Eingang (25) für eine Bordnetzspannung aufweist und ausgebildet ist, ein Überschreiten eines vorbestimmten Spannungswertes (97) zu erfassen und in Abhängigkeit von dem Spannungswert (97) ein Überspannungssignal (30) zu erzeugen, wobei die Steuereinheit (12) ausgebildet ist, die elektrische Maschine (3, 5) in Abhängigkeit von dem Überspannungssignal vom generatorischen Betrieb (100) in einen wenigstens teilweise verlustbehafteten Betrieb (102) oder in einen motorischen Betrieb (104) zu überführen.

2. Überspannungsschutzvorrichtung (2) nach Anspruch 1,
**dadurch gekennzeichnet, dass**
die Überspannungsschutzvorrichtung (2) wenigstens einen mit dem Eingang (25) verbundenen Halbleiterschutzschalter (16) aufweist, welcher ausgebildet ist, in Abhängigkeit von einem vorbestimmten Spannungswert (97) von dem Eingang (25) einen Strom über den Halbleiterschutzschalter (16) zu einem Masseanschluss (27) hin zu erzeugen und so die Bordnetzspannung (81) zu verringern.

3. Überspannungsschutzvorrichtung (2) nach Anspruch 1 oder 2,
**dadurch gekennzeichnet, dass**
die Steuereinheit (12) ausgebildet ist, die elektrische Maschine (3, 5) zum Erzeugen eines magnetischen Drehfeldes anzusteuern und in Abhängigkeit von dem Überspannungssignal (30) einen Phasenwinkel (100, 102, 104) einer Ansteuerung zu ändern, und die elektrische Maschine (3, 5) so wenigstens teilweise im verlustbehafteten Betrieb (102) und/oder im motorischen Betrieb (104) zu betreiben.

4. Überspannungsschutzvorrichtung (2) nach Anspruch 3,
**dadurch gekennzeichnet, dass**
die Steuereinheit (12) ausgebildet ist, in Abhängigkeit von dem Überspannungssignal (30) einen Phasenwinkel einer Ansteuerung, insbesondere eine Winkeldifferenz (100) zwischen einem Rotorwinkel (106) und einem von einem Stator (3) der elektrischen Maschine erzeugten Drehfeld zu verringern.

5. Überspannungsschutzvorrichtung (2) nach Anspruch 4,
**dadurch gekennzeichnet, dass**
die Steuereinheit (12) ausgebildet ist, in Abhängigkeit von dem Überspannungssignal (30) eine Winkeldifferenz (102) zwischen einem Rotorwinkel (106) und einem von einem Stator (3) der elektrischen Maschine erzeugten Drehfeld verschwinden zu lassen.

6. Überspannungsschutzvorrichtung (2) nach Anspruch 3,
**dadurch gekennzeichnet, dass**
die Steuereinheit (12) ausgebildet ist, in Abhängigkeit von dem Überspannungssignal eine Winkeldifferenz zwischen einem Rotorwinkel und einem von einem Stator der elektrischen Maschine erzeugten Drehfeld derart zu ändern, dass die elektrische Maschine vom Generatorbetrieb (100) in den vollständigen Motorbetrieb (104) überführt werden kann.

7. Überspannungsschutzvorrichtung (2) nach Anspruch 6,
**dadurch gekennzeichnet, dass**
die Steuereinheit (12) ausgebildet ist, die elektrische Maschine mittels des Pulsweitenmodulators (13) pulsweitenmoduliert anzusteuern und die Steuereinheit (12) ausgebildet ist, ein von einem Pulsweitenmodulator (13) der Steuereinheit (12) erzeugtes Ansteuermuster (43, 45, 47) in Abhängigkeit von dem Überspannungssignal zu invertieren (42, 44, 46).

8. Überspannungsschutzvorrichtung (2) nach einem der vorhergehenden Ansprüche,
**dadurch gekennzeichnet, dass**
die Steuereinheit (12) ausgebildet ist, in Abhängigkeit von dem Überspannungssignal (30) einen Erregerstrom durch eine Erregerspule (11) der elektrischen Maschine (3, 5) über einen mit der Erregerspule verbundenes Halbleiterbauelement abzubauen.

9. Überspannungsschutzvorrichtung nach Anspruch 3,
**dadurch gekennzeichnet, dass**
die Steuereinheit (12) ausgebildet ist, in Abhängigkeit von dem Überspannungssignal (30) eine Erregerspule (11) der elektrischen Maschine (3, 5) über einen mit der Erregerspule (11) verbundenen Halbleiterschalter (14), insbesondere eine H-Brücke, umzupolen.

10. Verfahren zum Betreiben eines Überspannungsschutzes für ein Fahrzeugbordnetz mit einer elektrischen Maschine, bei dem in einem Verfahrensschritt während eines generatorischen Betriebes der elektrischen Maschine ein Überschreiten eines vorbestimmten Spannungswertes (97) einer Bordnetzspannung (81) erfasst und ein das Überschreiten repräsentierendes Überspannungssignal (30) erzeugt wird, wobei in Abhängigkeit von dem Überspannungssignal (30) eine Schnellentregung eines Erregermagnetfeldes der elektrischen Maschine eingeleitet wird, und in einem weiteren Schritt ein zeitliches Ansteigen der Bordnetzspannung (81) erfasst und in Abhängigkeit von dem Spannungsanstieg ein Phasenwinkel (100, 102, 104) einer Ansteuerung der elektrischen Maschine derart geändert wird, **dadurch gekennzeichnet dass** die elektrische Maschine durch ein Invertieren eines pulweitenmodulierten Ansteuermusters vom generatorischen Betrieb (100) in den motorischen Betrieb (104) überführt wird.

## Claims

1. Overvoltage protection device (2) for an electric drive,
which is configured to be connected to an on-board network of a vehicle and is configured to reduce an overvoltage generated in the on-board network by switching off a consumer load,
**characterized in that**
the overvoltage protection device (2) is connected to a control unit (12) for an electronically commutated electrical machine (3, 5) and the overvoltage protection device (2) comprises an input (25) for an on-board network voltage and is configured to detect an exceeding of a predetermined voltage value (97) and to generate an overvoltage signal (30) as a function of the voltage value (97), wherein the control unit (12) is configured to transfer the electrical machine (3, 5) from the generator mode (100) into an at least partially lossy mode (102) or into a motor mode (104) as a function of the overvoltage signal.

2. Overvoltage protection device (2) according to claim 1,
**characterized in that**
the overvoltage protection device (2) comprises at least a semiconductor protection switch (16) which is connected to the input (25) and is configured to generate a current via the semiconductor protection switch (16) to an ground connection (27) as a function of a predetermined voltage value (97) from the input (25) and thus to reduce the on-board network voltage (81).

3. Overvoltage protection device (2) according to claim 1 or 2,
**characterized in that**
the control unit (12) is configured to drive the electric machine (3, 5) to generate a magnetic rotary field and to change a phase angle (100, 102, 104) of a drive as a function of the overvoltage signal (30), and thus to operate the electrical machine (3, 5) at least partially in the lossy mode (102) and/or in the motor mode (104).

4. Overvoltage protection device (2) according to claim 3,
**characterized in that**
the control unit (12) is configured to reduce a phase angle of a drive, in particular an angle difference (100) between a rotor angle (106) and a rotating field generated by a stator (3) of the electrical machine, as a function of the overvoltage signal (30).

5. Overvoltage protection device (2) according to claim 4,
**characterized in that**
the control unit (12) is configured to cause an angular difference (102) between a rotor angle (106) and a rotating field generated by a stator (3) of the electrical machine to disappear as a function of the overvoltage signal (30).

6. Overvoltage protection device (2) according to claim 3,
**characterized in that**
the control unit (12) is configured to change an angular difference between a rotor angle and a rotating field generated by a stator of the electrical machine as a function of the overvoltage signal in such a manner that the electrical machine can be transferred from the generator mode (100) to the fully motor mode (104).

7. Overvoltage protection device (2) according to claim 6,
**characterized in that**
the control unit (12) is configured to drive the electrical machine in a pulse-width-modulated manner by means of the pulse-width modulator (13) and the control unit (12) is configured to invert (42, 44, 46) a drive pattern (43, 45, 47) generated by a pulse-width modulator (13) of the control unit (12) as a function of the overvoltage signal.

8. Overvoltage protection device (2) according to any one of the preceding claims,
**characterized in that**
the control unit (12) is configured to reduce an excitation current through an excitation coil (11) of the electrical machine (3, 5) via a semiconductor component connected to the excitation coil as a function of the overvoltage signal (30).

9. Overvoltage protection device according to claim 3,
**characterized in that**
the control unit (12) is configured to reverse the polarity of an excitation coil (11) of the electrical machine (3, 5) via a semiconductor switch (14), in particular an H-bridge connected to the excitation coil (11) as a function of the overvoltage signal (30).

10. Method for operating an overvoltage protection for a vehicle on-board network comprising an electrical machine, wherein in a method step during a generator mode of the electrical machine, an exceeding of a predetermined voltage value (97) of an on-board network voltage (81) is detected and an overvoltage signal (30) representing the exceeding is generated, wherein a rapid de-excitation of an excitation magnetic field of the electrical machine is initiated as a function of the overvoltage signal (30), and in a further step a rise in the on-board network voltage (81) over time is detected and a phase angle (100, 102, 104) of a drive of the electrical machine is changed as a function of the voltage rise in such a manner that the electrical machine is transferred from the generator mode (100) to the motor mode (104) by inverting a pulse-width-modulated drive pattern.

## Revendications

1. Dispositif de protection contre les surtensions (2) pour un entraînement électrique,
lequel dispositif étant conçu pour être relié à un réseau de bord d'un véhicule et pour réduire une surtension générée dans le réseau de bord par une mise hors service d'un récepteur,
**caractérisé en ce que**
le dispositif de protection contre les surtensions (2) est relié à une unité de commande (12) pour une machine électrique (3, 5) commutée électroniquement et le dispositif de protection contre les surtensions (2) comporte une entrée (25) pour une tension de réseau de bord et est conçu pour détecter lorsqu'une valeur de tension prédéfinie (97) est dépassée et pour générer un signal de surtension (30) en fonction de la valeur de tension (97), dans lequel l'unité de commande (12) est conçue pour faire passer, en fonction du signal de surtension, la machine électrique (3, 5) du mode générateur (100) à un mode engendrant au moins partiellement des pertes (102) ou à un mode moteur (104).

2. Dispositif de protection contre les surtensions (2) selon la revendication 1,
**caractérisé en ce que**
le dispositif de protection contre les surtensions (2) comporte au moins un interrupteur de circuit à semi-conducteur (16) qui est conçu pour générer, en fonction d'une valeur de tension prédéfinie (97), un courant provenant de l'entrée (25) par l'intermédiaire de l'interrupteur de circuit à semi-conducteur (16) vers une borne de masse (26) et pour réduire ainsi la tension de réseau de bord (81).

3. Dispositif de protection contre les surtensions (2) selon la revendication 1 ou 2,
**caractérisé en ce que**
l'unité de commande (12) est conçue pour commander la machine électrique (3, 5) de manière à générer un champ magnétique tournant et pour faire varier, en fonction du signal de surtension (30) un angle de phase (100, 102, 104) d'une commande, et pour faire ainsi fonctionner la machine électrique (3, 5) dans le mode engendrant au moins partiellement des pertes (102) et/ou dans le mode moteur (104).

4. Dispositif de protection contre les surtensions (2) selon la revendication 3,
**caractérisé en ce que**
l'unité de commande (12) est conçue pour réduire, en fonction du signal de surtension (30), un angle de phase d'une commande, en particulier une différence angulaire (100) entre un angle de rotor (106) et un champ tournant généré par un stator (3) de la machine électrique.

5. Dispositif de protection contre les surtensions (2) selon la revendication 4,
**caractérisé en ce que**
l'unité de commande (12) est conçue pour faire disparaître, en fonction du signal de surtension (30), une différence angulaire (102) entre un angle de rotor (106) et un champ tournant généré par un stator (3) de la machine électrique.

6. Dispositif de protection contre les surtensions (2) selon la revendication 3,
**caractérisé en ce que**
l'unité de commande (12) est conçue pour faire varier, en fonction du signal de surtension, une différence angulaire entre un angle de rotor et un champ tournant généré par un stator de la machine électrique, de telle sorte que la machine électrique peut passer du mode générateur (100) au mode moteur complet (104).

7. Dispositif de protection contre les surtensions (2) selon la revendication 6,
**caractérisé en ce que**
l'unité de commande (12) est conçue pour commander, par modulation de la largeur d'impulsion, la machine électrique au moyen d'un modulateur de largeur d'impulsion (13) et l'unité de commande (12) est conçue pour inverser (42, 44, 46), en fonction du signal de surtension, un modèle de commande (43, 45, 47) généré par le modulateur de largeur d'impulsion (13) de l'unité de commande (12).

8. Dispositif de protection contre les surtensions (2) selon l'une des revendications précédentes,
**caractérisé en ce que**
l'unité de commande (12) est conçue pour réduire, en fonction du signal de surtension (30), un courant d'excitation au moyen d'une bobine d'excitation (11) de la machine électrique (3, 5) par l'intermédiaire d'un interrupteur à semi-conducteur relié à la bobine d'excitation.

9. Dispositif de protection contre les surtensions (2) selon la revendication 3,
**caractérisé en ce que**
l'unité de commande (12) est conçue pour inverser, en fonction du signal de surtension (30), la polarité d'une bobine d'excitation (11) de la machine électrique (3, 5) au moyen d'un interrupteur à semi-conducteur (14), en particulier un pont en H, relié à la bobine d'excitation (11).

10. Procédé pour faire fonctionner une protection contre les surtensions pour un réseau de bord de véhicule ayant une machine électrique, dans lequel pendant un mode générateur de la machine électrique, une étape de procédé consiste à déterminer si une valeur de tension prédéfinie (97) d'une tension de réseau de bord (81) a été dépassée et générer un signal de surtension (30) représentant le dépassement, puis, en fonction du signal de surtension (30), introduire une désexcitation rapide d'un champ magnétique d'excitation de la machine électrique, et une étape supplémentaire consiste à détecter une augmentation dans le temps de la tension de réseau de bord (81) et changer, en fonction de l'augmentation de tension, un angle de phase (100, 102, 104) d'une commande de la machine électrique, **caractérisé en ce que** la machine électrique est passée du mode générateur (100) au mode moteur (104) par une inversion d'un modèle de commande à largeur d'impulsion modulée.
